# EUROPEAN PATENT APPLICATION

(11) **EP 2 109 198 A1**
(43) Date of publication of application: **14.10.2009**
(21) Application number: 08200013.4
(22) Date of filing: 09.04.2008
(51) Int. Cl.: H01S 3/139, H01S 3/086, G02B 27/48, G02B 26/06, G02B 27/00

(54) **Laser display**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A laser is provided, suitable for use in laser displays, having a laser cavity defined by at least first and second mirrors, a lasing material positioned in an optical path within the cavity with an associated pumping source and wherein one of the mirrors has a reflective surface that is moveable so as to alter the length of the cavity at a rate sufficiently high to ensure that effects due to a speckle pattern, as perceived by an observer or detector of light generated by the laser, are reduced while preserving the instantaneous coherence of the laser light. Sufficiently rapid movement of the mirror surface ensures that any speckle pattern changes at a faster rate than can be detected by the human eye or by a detector so that speckle is no longer visible, or is at least considerably reduced.

## Description

This invention relates to laser displays and in particular, but not exclusively, to a laser for use in generating images in laser displays that are substantially free of the effects of laser speckle. The present invention may also be used in more general laser illumination applications where laser speckle is undesirable.

A difficulty with current laser-based displays is that speckle is often seen in the viewed image at the human eye. A number of known techniques attempt to reduce this speckle effect, including use of optical fibre "wagglers", rotating ground glass screens and variable phase screens, based upon polymer dispersed liquid crystals (PDLC), in an attempt to decohere the laser light so that the speckle is less visible to the human eye. In effect, these known techniques move the speckle pattern around in space at a rate quicker than the image persistence time (∼0.05 sec) of the human eye.

However, the known techniques for reducing laser speckle have a number of disadvantages: they rely on fine granularity of the screens used; they place an additional element within the optical path which induces optical loss; and the equipment tends to be bulky or involve moving parts which are prone to wear.

From a first aspect the present invention resides in laser, comprising:
a cavity defined by first and second mirrors;
a lasing medium positioned in an optical path within the cavity; and
a pumping source,
wherein the first or the second mirror comprises a reflective surface that is moveable so as to alter the length of the cavity at a rate sufficiently high to ensure that effects due to a speckle pattern, as perceived by an observer or detector of light generated by the laser, are reduced.

The inventors have found that if an oscillatory form of movement, for example, is applied to the reflective surface of one of the mirrors defining the laser cavity such that the period of oscillation is shorter than the period of persistence (approximately 0.05sec) in the human eye, the mode profile (and wavelength of emission of the overall laser system) and hence the speckle pattern changes too quickly for the eye to perceive the individual speckle patterns. If the mirror is moved at a frequency of 1 KHz for example, then up to 50 separate speckle patterns can be shown in the persistence time of the human eye (or the integration time of a detector). The speckle pattern will therefore appear to be averaged out and reduced at the viewer's eyes.

In a preferred embodiment, the first or the second mirror is a deformable mirror and the reflective surface is moveable as a result of deformation of the deformable mirror. The deformable mirror may be a self-deforming mirror, such as a bimorph deformable mirror, or a mirror comprising a deformable substrate that is deformable by means of one or more linear actuators. Several examples of known designs for deformable mirrors are described in patent applications by the present Applicant, published under the following references: W02004/057406, W02004/057407, W02005/124425 and W02006/046078, which documents are hereby incorporated by reference.

In a further preferred embodiment, the first or the second mirror is of a fixed shape and the respective mirror as a whole is moveable by means of an actuator.

Whereas a convenient choice of lasing medium emits infra-red light, for example at a wavelength of 1064nm, an optical wavelength- shifting crystal, in particular a known frequency doubling crystal, may be included within the laser cavity or positioned externally to the laser to shift the laser light into the visible part of the spectrum, for example into green light.

The laser according to this first aspect may be provided with a two part cavity comprising a first part defined by the first and second mirrors and a second part defined by the second mirror and a third mirror to form a so-called "folded cavity" laser. Preferably, the second mirror is a dichroic mirror and the third mirror has a reflective surface that is moveable to alter the total cavity length of the folded-cavity laser. Preferably a wavelength-shifting component, for example a frequency doubling crystal, is placed within the second part of the cavity so that the frequency-doubled light is confined to that second part of the cavity by the dichroic second mirror of the laser. The dichroic second mirror acts as an output coupler and extracts substantially all of the frequency-doubled light that is created within the second part of the cavity. The result is often a "cleaner" laser output in comparison with the simpler "in-line" two mirror cavity laser design.

From a second aspect, the present invention resides in a display apparatus having a laser light source comprising a laser according to the first aspect of the present invention. The display apparatus may be of any one of a number of different types, in particular of those types that rely upon a coherent light source, such as a holographic display or a Fourier display.

From a third aspect, the present invention resides in a sensor for detecting optical returns from an illuminated scene, having a laser light source for illuminating the scene comprising a laser according to the first aspect of the present invention. The use of a corrected laser light source according to the present invention for illuminating a scene, in particular a crime scene in which traces of organic materials are being sought through the detection of fluorescence of the materials under illumination, provides for a more sensitive sensor than one in which an uncorrected laser light source is used.

Preferred embodiments of the present invention will now be described in more detail, by way of example only, with reference to the accompanying drawings of which:
Figure 1 shows the components of a laser according to a first embodiment of the present invention and;
Figure 2 shows the components of a laser according to a second embodiment of the present invention.

During the image forming process in a laser display, coherence of the laser light can cause a speckle pattern on the back of an observer's eye. In head-up displays, for example, the speckle pattern can be not only distracting but also difficult to tolerate for long periods. Known attempts to prevent speckle patterns forming or to render them imperceptible have relied in particular upon mechanical techniques or variable phase screens within the display apparatus which attempt to decohere the laser light. Such techniques add bulk and complexity to the display apparatus and introduce optical losses.

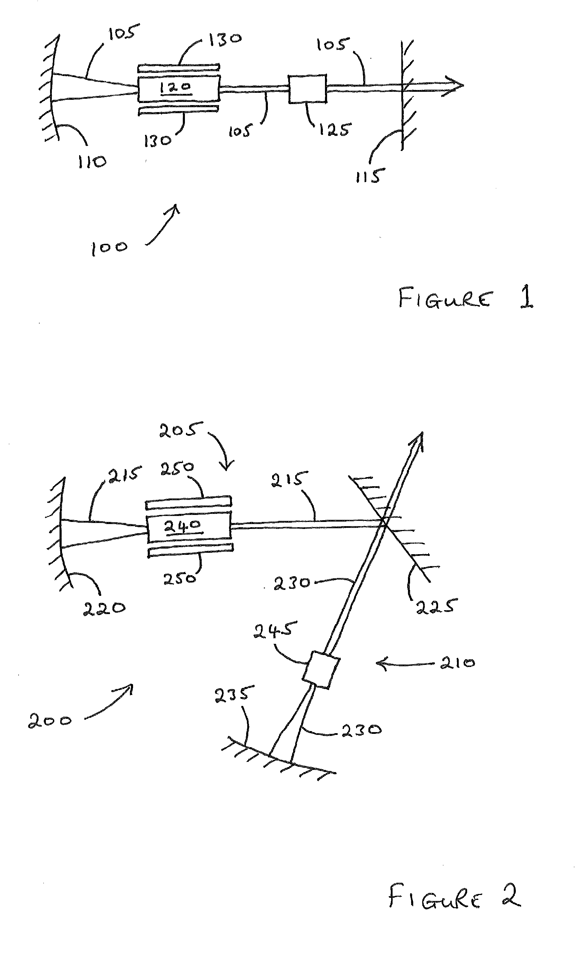

According to a first embodiment of the present invention, a modified form of "In Line" Cavity (two mirror cavity) laser is provided for use as an optical light source in a display apparatus. The display apparatus may be any known type of laser-illuminated display apparatus and the modified laser enables conventional techniques for removing laser speckle in the display apparatus to be dispensed with. Examples of laser displays suitable for use with the modified laser of the present invention include a head-up display, a holographic display, a display in which an image is generated using a scanning laser beam, or any other type of display in which the displayed image comprises laser light and for which laser light therefore enters the eye of an observer with the potential for the observer to experience laser speckle. The laser according to this first embodiment of the present invention will now be described with reference to Figure 1.

Referring to Figure 1, the main components of a laser 100 are shown in schematic form to comprise: a laser cavity, defined by the optical path 105 between the reflective surfaces of a first mirror 110 and a partially reflective, preferably dichroic, second mirror 115; a lasing medium 120 and an optical frequency doubling component 125, each positioned in the optical path 105 within the laser cavity; and an associated pump light source 130 positioned, in this example, to pump the lasing medium 120 from the side. While not essential, the use of a dichroic second mirror 115 enables a single frequency, e.g. green, visible light output from the laser 100, for example at 532nm wavelength. The dichroic second mirror 115 acts as an output coupler, allowing out the 532 nm radiation, and retaining the natural infrared (IR) radiation of the lasing medium 120 within the cavity. A person of ordinary skill in the laser field would know to select and control the parameters of the frequency doubling component 125 to ensure that it operates as required within such a laser design as this.

Not shown explicitly in Figure 1, the laser 100 further comprises means for moving the reflective surface of the first mirror 110 back and forth repeatedly so as to alter the length of the laser cavity, and hence the overall mode profile of the laser 100, at a predetermined rate and with a predetermined form of movement. The first mirror 110 may comprise a known type of deformable mirror, such as one having a reflective surface layer provided on a deformable mirror substrate that is in turn deformed by one or more linear actuators or, if a "bimorph" deformable mirror, by energisation of one or more regions of a piezoelectric material layer bonded to the mirror substrate. The deformable mirror may be controlled to adjust the speckle pattern that may result. The mirror's reflective surface may simply be translated back and forth at an appropriate rate. Preferably the slope of the reflective surface may be changed to give spherical wavefront curvature, or elliptical or cylindrical curvature, and the axes and orientation of these curvatures may be changed at an appropriate rate to influence the number of different laser modes addressed in a given time interval, and hence the number and rate of change of the resultant speckle patterns. The detailed choice of these modes or speckle patterns would be dependent on the design of the mirror 110 and the overall degree of speckle suppression required in the display.

In a simple embodiment, the first mirror 110 may be of a fixed profile and an actuator may be attached to move the entire first mirror 110, and hence its reflective surface, back and forth with sinusoidal motion at the rate required to reduce an observer's perception of speckle. Preferably, the first mirror 110 is of a design suited to laser cavity (e.g. high optical power) applications.

Preferably, the lasing medium 120 in this embodiment (for a green laser display) can be one of Nd:YAG, Nd:YVO₄ or Nd:YAP (Nd:YAP gives a 1080 nm light output, which when frequency doubled is compatible with the emission wavelength of the phosphors used in current CRT-based displays) or other lasing material. The optical frequency doubler 125 is a crystal of Potassium Titanyl Phosphate (KTP), Lithium Triborate (LBO) or other frequency doubling crystal. The optical frequency doubler 125 enables the laser 100 based upon one of the preferred lasing media 120 to emit green light. The pump 130 may comprise a flashlamp or laser diodes, or external fibre-coupled laser diodes.

The inventors have found that, in a simple implementation, if an oscillatory form of movement is applied to the reflective surface of the first mirror 110 such that the period of oscillation is shorter than the period of persistence (approximately 0.05sec) in the human eye, the mode profile (and wavelength of emission of the overall laser system 100) and hence the speckle pattern changes too quickly for the eye to detect. If the mirror is moved at a frequency of 1 KHz then up to 50 separate speckle patterns can be shown in the persistence time of the human eye (or the integration time of a detector). The speckle pattern will appear to be averaged out and reduced at the viewer's eyes. The degree of reduction in speckle is dependent on the number of independent speckle patterns N viewed within a viewing period (ideally the image persistence time for the viewer). The maximum reduction is of order 1/√N. That is, the magnitude of perceived speckle reduction depends to a large extent on the speckle patterns being sufficiently distinct that they are not related by linear combinations of each other. See for example Joseph W. Goodman: "Speckle Phenomena in Optics: Theory and Applications", Roberts & Company, Englewood, Colorado, 2007.

Advantageously, the addition of means to move the reflective surface of the first mirror 110 adds very little bulk, weight or complexity to what is otherwise a conventional laser and adds little to the display apparatus that uses the laser 100 as a light source, in contrast to prior art attempts to reduce laser speckle in display devices. Furthermore, the laser 100 is stable, emits a fixed lasing mode pattern or steps through a number of different lasing modes through movement of the mirror 110, but light emitted by the laser 100 remains instantaneously coherent despite the changing length or shape of the laser cavity. The light can therefore be used with laser displays which rely on coherency in the image forming process, for example with displays such as Fourier displays and holographic displays. However, whereas the laser 100 according to preferred embodiments of the present invention may be used with both "normal" displays and with Fourier or Holographic displays, the performance requirements of the laser 100 for each type of display are subtly different.

In the "normal" display, the laser illuminates a display device which may be a liquid crystal display (LCD) or a reflective liquid crystal on silicon (LCOS) device. The image data is displayed directly on the LCD. This device, in a conventional mode, acts as a polarisation switch. Each pixel with image data switches the state of the polarisation of the light reflected from it. Operating the device between crossed polarisers generates an image in switched light, which replicates the information displayed on the LCD. This direct modulation is simple to implement. However, it has a disadvantage. In a display where most of the information is symbology (such as a Head-up Display) only a relatively small number of pixels are switched to show the image content. Typically this is less than 10%. Therefore, less than 10% of the screen is modulated with data. The rest of the light is not used in forming the image. Depending on the system design, it is absorbed in a polariser or in a beam dump. For high brightness displays, or displays where power consumption is at a premium, this is a significant disadvantage.

In a Fourier display, the display device is modulated with a representation of the original image data. This representation is related to the Fourier transform of the original image. Each pixel in the original image contributes to every pixel in the representation on the LCD. The encoding of the Fourier Transform onto the LCD is in optical phase. The original image is reconstructed by inverting the Fourier transform to show the original image. This process, which is akin to holography, is achieved by using a simple lens in the optics. The reconstruction is dependent on a laser illumination of the LCD being coherent over the display device. The optical loss is low. Most of the laser light illuminating the display device is used by being diffracted substantially only into the displayed object giving a significant advantage over a normal display. Typically up to 70% of the illuminating laser light may be usefully used giving a significant advantage over the normal display described above.

In the "normal" display, where a laser 100 according to the present invention is used as the illuminating source, it does not matter if the laser 100 is operated in such a way as to degrade the coherency of the light. However, if the laser 100 is used for a Fourier display, the image forming process is critically dependent on the light being coherent across the LCD device. It is essential that the laser 100 is operated in a way which does not substantially degrade the instantaneous coherence of the laser. As discussed above, this may be readily achieved in preferred embodiments of the present invention while at the same time altering any resultant speckle pattern at such a rate that the speckle patterns are substantially undetectable or of reduced effect to an observer of the display.

A laser according to a second preferred embodiment of the present invention will now be described with reference to Figure 2. The laser in this second embodiment is based upon a so-called "folded cavity" laser.

Referring to Figure 2, the main components of a "Folded Cavity" (three mirror, V-fold cavity) laser 200 are shown in schematic form to comprise a laser cavity having a first part 205 and a second part 210, the first part 205 being defined by the optical path 215 between the reflective surfaces of a first mirror 220 and a dichroic second mirror 225 and the second part 210 by the optical path 230 between the reflective surfaces of the dichroic second mirror 225 and a third mirror 235. A lasing medium 240 is positioned in the optical path 215 of the first part 205 of the cavity and an optical frequency doubling component 245 is positioned in the optical path 230 within the second part 210 of the cavity. A pump light source 250 is provided, positioned to pump the lasing medium 240 from the side. A fibre laser may be used, alternatively, to end-fire pump the lasing medium 240. Preferred lasing materials for the lasing medium 240 and frequency-doubling crystals for the frequency-doubling component 245 are as suggested for the first preferred embodiment described above.

The dichroic second mirror 225 has a coating that ensures that the mirror 225 is highly reflective to light of wavelength in the region of 1064nm, for example, as generated by the lasing medium 240, and transmissive to frequency-doubled light of wavelength 532nm created within the second part 210 of the cavity as a result of passing through the frequency-doubling component 245. This ensures that the frequency-doubled light is confined to the second part 210 of the cavity. This has two effects: very little of the 532 nm radiation passes back into the original first part 205 of the cavity and hence into the lasing medium 240, where it might be otherwise be absorbed and cause heating effects and beam distortion; and only the 532 nm radiation is coupled out through the dichroic second mirror 225 which acts as an output coupler, ensuring the purity of the output laser light.

Not shown explicitly in Figure 2, the laser 200 further comprises means for moving the reflective surface of the third mirror 235 back and forth repeatedly so as to alter the length of the laser cavity 205, 210, and hence the overall mode profile of the laser 200, at a predetermined rate and with a predetermined form of movement, as for the first preferred embodiment described above. Preferred means for moving the reflective surface of the third mirror 235 are as for the first embodiment above in that the third mirror 235 may comprise a self-deforming bimorph type of deformable mirror, a deformable mirror that is deformed by means of one or more linear actuators, or a fixed profile mirror that is moveable as a whole by means of a suitable actuator.

The lasing media 120, 240 of the first and second preferred embodiments may, as an alternative to pumping (130, 250) from the side, be end-pumped with laser diodes or by means of a fibre laser.

Preferred designs for a deformable mirror that are suitable for use in the laser cavity of a laser according to preferred embodiments of the present invention are described in patents and patent applications by the present Applicant, in particular in international patent applications published as WO 2004/057406, WO 2004/057407, WO 2005/124425 and WO 2006/046078. Such designs of deformable mirror are particularly suited for use as the first mirror 110 of the first embodiment and the third mirror 235 of the second embodiment of the present invention, described above.

It is known to use frequency-doubled Nd:YAG lasers in sensors for investigating crime scenes. The bright green radiation, when scanned across the surface of a crime scene, produces fluorescence from traces of organic materials. These organic materials may include fatty acids which are present in fingerprints, or traces of other organic molecules such as drugs or explosives. In trying to detect low levels of contaminants such as those which might be present in fingerprints, the optical fluorescence level and the shape of the resultant smears observed can be critically dependent on the uniformity of illumination across the field of view of the sensor. Speckle in the optical illumination system compromises the performance of the sensor, particularly at low signal levels which are characteristic of fingerprint detection for example. Use of a laser according to preferred embodiments of the present invention in the laser illumination system of such sensors has the effect of reducing or eliminating the effect of laser speckle and can significantly improve the performance of such systems.

## Claims

1. A laser, comprising:
a cavity defined by first and second mirrors;
a lasing medium positioned in an optical path within the cavity; and
a pumping source,
wherein said first or said second mirror comprises a reflective surface that is moveable so as to alter the length of the cavity at a rate sufficiently high to ensure that effects due to a speckle pattern, as perceived by an observer or detector of light generated by the laser, are reduced.

2. The laser according to claim 1, wherein said first or said second mirror is a deformable mirror and wherein said reflective surface is moveable as a result of deformation of the deformable mirror.

3. The laser according to claim 1 or claim 2, wherein said first or said second mirror is a self-deforming mirror.

4. The laser according to claim 1, wherein said first or said second mirror is moveable by means of an actuator.

5. The laser according to claim 1, wherein the cavity further comprises a second part defined by said second mirror and a third mirror, wherein said second mirror is a dichroic mirror and wherein the reflective surface of said third mirror is moveable so as to alter the length of the cavity.

6. The laser according to any one of claims 1 to 4, further comprising optical wavelength shifting means positioned within the cavity.

7. The laser according to claim 5, further comprising optical wavelength shifting means positioned within the second part of the cavity.

8. The laser according to claim 6 or claim 7, wherein the optical wavelength shifting means comprise a frequency-doubling crystal.

9. A display apparatus having a laser light source comprising a laser according to any one of claims 1 to 8.

10. The display apparatus according to claim 9, comprising holographic display means.

11. A sensor for detecting optical returns from an illuminated scene, having a laser light source for illuminating the scene comprising a laser according to any one of claims 1 to 9.
